# EUROPEAN PATENT APPLICATION

(11) **EP 3 660 468 A1**
(43) Date of publication of application: **03.06.2020**
(21) Application number: 18920188.2
(22) Date of filing: 15.10.2018
(51) Int. Cl.: G01F 1/075

(54) **ELECTRONIC TACHYMETRIC SENSOR FOR MEASURING THE FLOW RATE OF LIQUID AND GAS**

(30) Priority: 03.10.2018 RU 2018134916
(71) Applicant: Obshchestvo s ogranichennoy otvetstvennost'yu "TELEMATICHESKIE RESHENIYA", Moscow 143026 (RU)
(72) Inventor: The designation of the inventor has not yet been filed
(74) Representative: Papula Oy
(86) International application number: PCT/RU2018/000682
(87) International publication number: WO 2020/071945

(57) **Abstract**

This technical solution generally relates to the field of measuring equipment and, in particular, to measuring instruments for determining the number of revolutions of the primary sensing element rotating by the flow of flowing water. The electronic tachometric meter to record the flow of fluid and gas, made with the capability to transmit measurement results via a communication module, containing a body with an inlet and outlet pipes, in which the following is located: a primary sensing element installed on an axis in the body cavity and made with the capability of rotation by the flow of flowing water; an electronic metering mechanism which is situated under the top cover and on the foundation, made with the capability to measure the rotation of the primary sensing element in both directions using two Hall sensors; a liquid crystal indicator situated on the electronic metering mechanism and under the top cover, made with the capability to display the measured value of the fluid volume determined by the electronic metering mechanism; a power supply unit situated on the electronic metering mechanism; two measuring magnetic field converters, the outputs of which are connected to two separate inputs of the analogue-to-digital converter of the electronic metering mechanism, made with the capability to detect the rotation of the primary sensing element in two directions and situated on the lower part of the electronic metering mechanism; a communication module situated on the electronic metering mechanism and made with the capability to transmit data on the fluid consumption to a receiving device. The technical result is to improve the accuracy of measuring the number of revolutions of the primary sensing element of the meter, measure the volume of spilt water in both directions while reducing its power consumption and expand the functionalities of the meter. 1 independent claim, 7 dependent claims, 3 figures.

## Description

### FIELD OF INVENTION

This technical solution generally relates to the field of measuring equipment and, in particular, to measuring instruments for determining the number of revolutions of the primary sensing element rotating by the flow of flowing water. This technical solution may be used to measure the volume of cold and hot drinking water as well as water in heating grids of heat supply systems, in residential houses as well as in industrial buildings during metering operations. Electronic meters with the transmission of measurement results by means of a communication module are designed for operation both as an independent device and as part of hardware & software systems and measuring automated energy resource control and metering systems.

### BACKGROUND OF INVENTION

The principle of operation in tachometric water meters is based on counting the number of revolutions of the primary sensing element (impeller or turbine) by magnets attached to its blades when water flows through it. The metering mechanism is separated from water (in which the primary sensing element is situated) by a separation water-proof membrane. Nowadays, the rotation of the primary sensing element (impeller or turbine) in standard tachometric water meters with a mechanical metering mechanism is transferred by the operation of magnetic forces through a membrane to the ring-type magnet of the central axis of the metering mechanism of the meter. The axis using a gear transmission causes the rotation of the metering gear mechanism of the device reproducing the number of revolutions of the impeller or turbine to a mechanical dial.

A water meter (patent RU No. 2337320, patent holder Rosita DMD LLC (RU), publication date: October 27, 2008) is known from the prior art. The meter contains an impeller installed in the body cavity with two magnets diametrically situated on it, one Hall sensor installed on the external part of the body above the trajectory of the magnets when the impeller rotates, a unit generating pulsed power supply for the Hall sensor, a microcontroller-based control and computation unit, a conversion factor optimization unit, a timer, a liquid crystal indicator, an electric power supply unit, and a computer communication unit.

A metering device for water and gas flow meters (patent RU No. 2131115, G01F 1/075) is also known from the prior art, and the device contains an information reading device, an electronic device for conversion of the number of revolutions of the sensing element into the quantity of the substance which passed through the meter with a power supply system for the sensors, a unit for conversion factor optimization depending on the current flow and an indication device, in which case the information reading device is made in the form of two devices installed through a diamagnetic partition at the same level diametrically in relation to the rotation axis of the magnet of the sensing element of the Hall sensors whose surfaces of interaction with the magnet of the sensing element are identical and the outputs of the sensors are combined, the sensors are electrically connected with the power supply system that generates power supply pulses (for example, 250 pulses per 1 liter) alternately to one of the Hall sensors upon a command of the previous one, in which case the indication device is provided with a connection circuit only for the fixed time of reading indications.

Two Hall sensors in the meters described in this patent are used only to determine the rotation frequency of the impeller, with no regard to the direction of its rotation, thus both the forward or backward movement of the fluid results in an increase in the calculated flow indications of the meter.

One of the drawbacks of this device is insufficiently low power consumption because Hall sensors consume considerable current even in case of a pulsed power supply. When there are two Hall sensors, they make the major contribution to the consumption of the whole device and consume so much current that it becomes necessary to use high-capacity cells (batteries) and, consequently, results in an increased price of the metering device and increases the dimensions of the technical solution, which is a considerable negative factor for a household appliance.

Another drawback is that the structure of the device does not have any means to input conversion factors to the gear factor optimization unit, which factors are determined on the basis of the results of calibration of the metering device.

### ESSENCE OF THE TECHNICAL SOLUTION

This technical solution is aimed at eliminating the drawbacks inherent in the solutions known from the prior art as well as adding a new functionality to meters, i.e. transmission of measurement results using a communication module.

The technical task or the technical problem resolved in this technical solution is to measure the number of revolutions of the primary sensing element (impeller or turbine) in both directions rotating by the flow of flowing water using an electronic metering mechanism as well as to add a communication module to this electronic metering mechanism for the transmission of measurement results, with the achievement of low power consumption of the device allowing for ensuring its operation during the whole service life from a single battery.

The technical result achieved in resolving the above-mentioned technical task is to improve the accuracy of measuring the number of revolutions of the primary sensing element (impeller or turbine) of the meter, determining the volume of the split fluid in both directions while reducing its power consumption, as well as expanding the functionalities of the meter.

The said technical result is achieved by excluding mechanical rotating tooth wheels (which have a high static and dynamic moment of resistance, which worsens the sensitivity threshold and results in the elevation of the lower limit of the range of measurable flows), by the implemented capability to change dynamically the Hall sensor sampling frequency depending on the fluid flow, by a reduced sampling frequency of the second Hall sensor, which reduces the power consumption of the metering mechanism, by the implemented capability to set factors of conversion of the impeller rotation frequency into the flow values determined on the basis of the results of calibration of the metering device in the conversion factor optimization unit, and by adding a communication module for the transmission of measurement results.

In some versions of implementation, the primary sensing element is an impelling element (impeller) or a turbine.

In some versions of implementation, the power supply unit is a rechargeable battery which is built in the body.

In some versions of implementation, the rechargeable battery is a cylindrical or tablet lithium thionyl chloride or lithium manganese battery.

In some versions of implementation of the meter, the communication module can be implemented on the basis of a wireline or wireless (using a radio module) technology.

In some versions of implementation, the receiving device is a base station or a repeater device.

In some versions of implementation, the communication module is built in the meter in the form of additional electronic components and an antenna path track on a single printed circuit board of the device.

In some versions of implementation, the electronic metering mechanism performs an independent calculation of and displaying on a liquid crystal indicator the volume of the fluid which passed through the meter in the forward or backward direction.

In some versions of implementation, a certain sum or difference of the volume of fluid in the forward and backward direction, or both volumes separately, are transmitted to the receiving device by means of the communication module.

### BRIEF DESCRIPTION OF THE DRAWINGS

The signs and advantages of this technical solution will become obvious from the detailed description given below and the enclosed drawings where:
Fig. 1 shows an example of implementation of an electronic impeller-type meter displaying the body of the device and its internal components, namely the rechargeable battery and the electronic module;
Fig. 2 shows an example of implementation of the internal components of the claimed device displaying the electronic module, the communication module (it can be a radio module as an example), the antenna path track, and the liquid crystal indicator (LCD);
Fig. 3 shows an example of implementation of the electronic module under which the rechargeable battery and two Hall sensors are situated.

### DETAILED DESCRIPTION

The technical solution can be implemented as a component of a distributed computer system (whether or not centralized) whose components are cloud or local servers, measuring instruments, routers, etc., without any limitation.

In this solution, the system means a computer system or an automated system (AS), a computer, an NC (numerical control) system, a PLC (programmable logical controller), a computerized control system and any other devices capable of executing a preset, clearly defined sequence of computing operations (actions, instructions).

The principle of operation of the claimed technical solution is to measure the number of revolutions of the primary sensing element which can be an impeller or a turbine rotating by the flow of flowing water. The number of revolutions of the impellor or turbine is proportionate to the volume of water flowing through the meter. Water from the pipeline through a protection mesh goes inside the measuring chamber of the flow converter and causes the primary sensing element to rotate. The number of revolutions of the primary sensing element (impeller or turbine) during the same time interval is proportionate to the volume of water that has passed through the meter.

The passage of a water jet causes the impeller or turbine to rotate, and the rotation depends on the flow rate. As a result of the rotation of the impeller or turbine, a magnetic field is created in the circuit and the field is transmitted to the measuring magnetic field converter (for example, a Hall sensor) and, after that, a pulse, i.e. a signal of a certain frequency, is given to the reading device. In the given example, the use of Hall sensors is based on the Hall effect, i.e. the appearance of a transverse difference of potentials when a constant current conductor moves in a magnetic field.

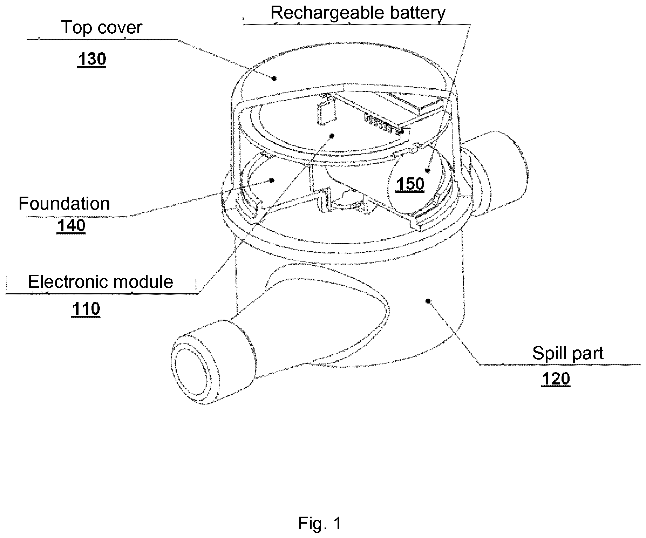

This technical solution contains an electronic metering mechanism (or an electronic module **110**, as shown in Fig. 1) which senses the rotation of the impeller by an electronic metering mechanism using two measuring magnetic field converters, i.e. Hall sensors, or induction coils which are situated on the bottom board of the metering mechanism. The electronic measuring mechanism **110** is part of the meter allowing for determining the measured value amount. The average power consumption of the metering mechanism is 100µA·h per 100 m³ of water, and the instantaneous current consumption, depending on the water flow, ranges from 15µA at the minimum flow to 320 µA at the maximum flow. In various versions of implementation, the metering mechanism can be a mechanical, electromechanical or electronic device containing both a mass storage device and an LCD that store or display information, but in the specific given version of implementation it is an electronic device. This mechanism is inside the meter body under the top cover **130** and is situated on the foundation **140**.

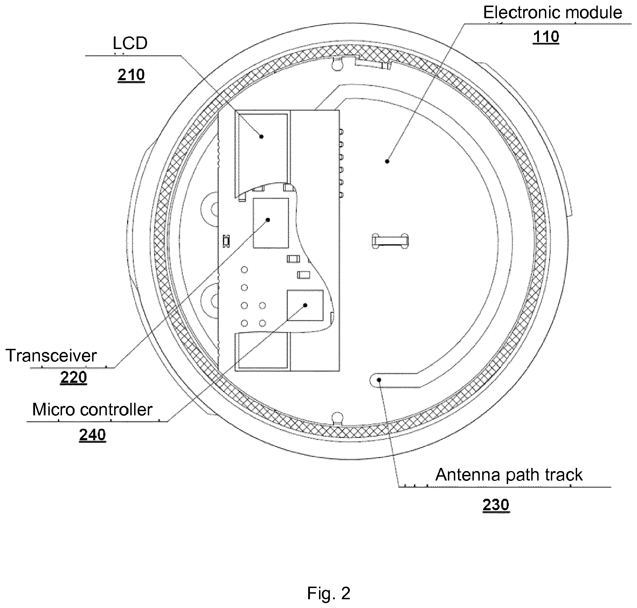

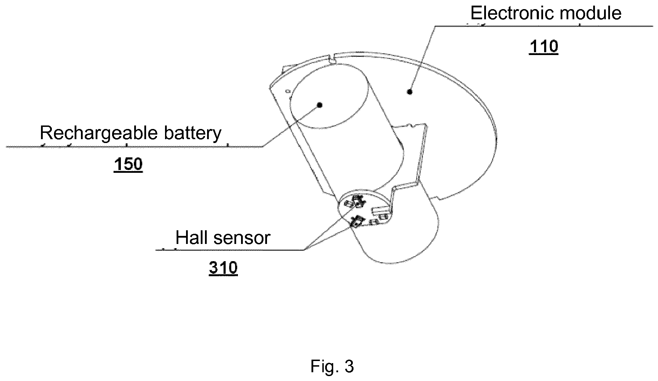

The two Hall sensors **310** shown in Fig. 3 (or, in an alternative version of implementation, other measuring magnetic field converters, i.e. induction coils or Wiegand sensors) allow for determining the impeller rotation direction, in which case the number of revolutions of the impeller allows for determining the volume of the spilt fluid unambiguously. For example, in the current implementation of the technical solution, one liter of spilt fluid equals 34.7 revolutions of the impeller. The two Hall sensors **310**, which have independent power supply circuits are controlled by means of the electronic module **110** (shown in Fig. 3) which a computing device built in the meter body under which they are situated. As shown in Fig. 3, the Hall sensors 310 are situated in the meter body above the spill part. The outputs of the Hall sensors **310** are connected to two separate inputs of the ADC (hereinafter, the analogue-to-digital converter) of the metering mechanism **110**. The metering mechanism **110** (which includes a pre-programmed micro controller or a micro processor) supplies power periodically to the Hall sensors **310**, measures the analogue level at the output of the sensors and subsequently turns off the power. The measured data is processed in accordance with the algorithm that allows for calculating the number of the magnetic field rotation periods at the place of installation of the Hall sensors **310**. The rotation of the magnetic field conforms to the rotation of the impeller of the spill part **120** or is multiple-larger due to using magnets with the number of poles more than two. The spill part **120** of the meter, as shown in Fig. 1, is made with the calculation of the necessary loads and is capable to serve for many years, in which case in the spill part **120** of the device the chamber (not shown) can consist of plastic parts, which allows for achieving a better stability of indicators. The frequency of measurements of signals at the outputs of the Halls sensors **310** changes dynamically depending on the impeller rotation frequency, which allows for decreasing the average power consumption of the device as well as for improving its accuracy. The signal from the second Hall sensor (which is situated at the fixed angle of 135 degrees diametrically in relation to the first Hall sensor) allows for determining the rotation direction of the impeller. The minimally sufficient sampling frequency of the second Hall sensor is several (in average, 2 to 5) times lower than the necessary sampling frequency of the first Hall sensor, which allows for reducing the power consumption of the claimed device, performing the sampling of the sensors at different intervals. For example, in the current implementation of the technical solution, one rotation direction determination cycle is performed per each 10 revolutions of the impeller and lasts for 3 revolutions of the impeller. Thus, the ratio of the sampling frequency of the first Hall sensor to the sampling frequency of the second Hall sensor is the value of 10/3. Besides, this technical solution, in addition to the generation of pulsed power supply for the Hall sensors **310**, uses the mechanism of dynamically changing the sampling frequency of the Hall sensors **310**, depending on the flow. When the number of revolutions of the impeller is calculated, the electronic metering mechanism **110** converts the number of revolutions of the impeller into the spilt flow, depending on the "weight" of each revolution that depends on a specific section of the gear characteristic of the flow in which the measuring system is at the current point of time. The weights that determine the rated characteristic are stored in a non-volatile memory of the metering mechanism **110** and can be changed in the process of individual calibration of the product. For example, in the current implementation of the technical solution, seven sections of the gear characteristic of the flow are used: 0 - 50 liters per hour (Iph), 50 - 70 Iph, 70 - 90 Iph, 90 - 500 Iph, 500 - 1000 Iph, 1000 - 2000 Iph, 2000 - 3000 Iph. The following weight factors correspond to those sections: 2863, 2878, 2892, 2907, 2917, 2927, 2932. This allows for compensating the non-linearity of the gear characteristic of the spill part and improve considerably the accuracy of measurements. The metering mechanism **110** performs independent counting of the volume of the fluid which passed through the meter both in the forward and backward direction. Depending on the device operation configuration, both the sum (difference) of those volumes and both volumes separately can be transmitted by means of the communication module. The value of the fluid volume is indicated on the liquid crystal indicator (LCD **210**, as shown in Fig. 2) situated on the metering mechanism **110**. The measured volume is displayed, for example, in cubic meters. In some versions of implementation of the meter, the top cover **130** is fully transparent or has only one transparent area for the LCD **210**.

DRV5053, TLV493D sensors can, without limitation, be for example used as a Hall sensor **310**.

In some versions of implementation, impeller or turbine rotation frequency recalculation factors are preset or set to the flow value in advance or in the process of operation, depending on the flow amount. Such factors can be pre-defined for different sections of the gear characteristic of the spill part **120** (single factors for the whole batch of spill parts) and set individually for each meter in the process of calibration of the meter during manufacturing. For example, in the current implementation of the technical solution, seven sections of the gear characteristic of the flow are used: 0 - 50 Iph, 50 - 70 Iph, 70 - 90 Iph, 90 - 500 Iph, 500 - 1000 Iph, 1000 - 2000 Iph, 2000 - 3000 Iph. The following weight factors correspond to those sections: 2863, 2878, 2892, 2907, 2917, 2927, 2932. If the said values of the factors do not ensure the compliance with the prescribed metrological accuracy class of a specific sample, the factor values are updated and saved to the memory of that sample in the process of calibration of the product.

In some versions of implementation, the following information can, without limitation, be displayed on the liquid crystal indicator **210** sequentially or in parallel, depending on the size of the meter:

For example, the value of the measured volume of water flow, whether forward or backward, can be displayed, with the lower-order graduation interval of 0.0001 m3. The whole and fractional part of the number are separated by the character ".".

The fractional part of the measured volume of water flow can also be displayed, with the lower-order graduation interval of 0.00001 m3. It is displayed as a line with the characters "PR", then a space, then character "." and five characters that reflect the fractional part of the measured water flow. The data can be used for the accurate reading of the measured water volume when the device is checked.

The identification name and the version number of the embedded software (SW) of the meter are also displayed. This information is displayed, for example, as a line with the characters "SW", then a space, then the identification name of the meter, the character "-" and the SW version number. The embedded software (SW) installed to the non-volatile memory of the metering mechanism **110** during manufacturing may not be modified, downloaded or read through any interface in the process of operation. The SW is designed for gathering, transforming, processing and displaying the data on the indicator device 210 of the metering mechanism **110** (in Fig. 2, the LCD **210**) and transmitting these measurement results and diagnostic information to external measuring systems and hardware & software systems for analysis and processing.

The serial number of the meter is similarly displayed as a line with the characters "N.", then a space, and then the serial number of the meter.

The meter records the volume of the backward fluid flow, the volume of such a flow, depending on the requirements of the customer and the effectively legislation, can be deducted or not deducted from the accumulated volume as well as be displayed separately.

The programmed micro controller **240** situated on the printed circuit board of the computing device **110**, using an algorithm, determines the rotation of the primary sensing element, thereby accumulating in its internal memory the data on the volume of the spilt fluid on the basis of the data on the quantity and rotation direction as well as the preset factors for the impeller rotation frequency recalculation into a flow value. The micro controller, using a timer, periodically (depending on the configuration of a specific data transmission protocol) sends a message with measurement results by means of the communication module to the receiving device. For example, in this technical solution, messages with measurement results are sent once every 24 hours and contain an hourly breakdown of the water flow in both directions. In addition to the measurement results, the sent message contains, among other things, a unique device ID.

This technical solution contains a communication module (shown as a radio module **220** in Fig. 2) for the remote transmission of data on the consumption of fluid to a remote or local server, which is built in the metering mechanism **110**. The communication module **220** can be built in the meter in the form of additional electronic components and an antenna path track **230** on a single printed circuit board of the device. The communication module (radio module **220**) via a data transmission channel (using the NB-Fi, LoRa, ZigBee, Wi-Fi protocol or another wireless data transmission protocol) transmits data on the current reading of the spilt volume of water to the receiving device (base station or a repeater device, or other channel forming equipment).

The receiving device (base station or repeater device, or other channel-forming equipment) transmits the data through any type of network, including a local area network (LAN), wide area network (WAN) or a connection with an external computer (for example, through the Internet using Internet service providers) to a server with server software which ensures the reception, storage and processing of the received data with measurement results. This server with the server software, both together with receiving devices and without them, is a Hardware & Software System (abbreviated as HSS). An HSS ensures displaying the data in the user's personal office and generates the display of the measurement data from the meters in a user-friendly form, in a table or graphical form in a browser (on an HTML page) or in a mobile application as well as makes it possible to receive data by means of special program interfaces (API - application program interface) for using the data in external software products.

The main units of the meter can be made of a brass alloy or plastic non-hazardous to the human health and its design (body) contains a top cover **130** of the meter which can be transparent, can be made of plastic and which ensures resistance to an external constant magnetic field, as well as a foundation **140** for internal electronic components and a spill part **120** inside which the primary sensing element (impeller or turbine) is situated. Various colors of the internal elements of the meters complying with the state standards can be used.

The protection against unauthorized access to the internal elements of the meter is ensured by a one-piece design (a non-detachable attachment of the metering mechanism **110** to the body), or a protection cover (ring) for attachment of the metering mechanism **110** to the body is envisaged. The ring prevents access to the internal elements of the meter without any visible damage.

In a specific version of implementation, as shown in Fig. 1, the power supply unit is a rechargeable battery **150** which is built in the body of the technical solution and situated under the metering mechanism **110**. This rechargeable battery **150** can be a cylindrical (as shown in Fig. 1) or tablet lithium thionyl chloride or lithium manganese battery with the voltage, for example, of 3V or 3.6V which has an energy capacity, a capability to work in a wide range of temperatures of -55..+85. The line of lithium thionyl chloride or lithium manganese batteries is divided into three main groups which can be used in this utility model: high-capacity, high-power, and high-temperature. In this technical solution, low power consumption (0.1 mA*h/m3) is implemented due to the following criteria:
- use of modern sensors with a low electric power consumption;
- use of the software for processing of output signals of the Hall sensors using an energy efficient micro controller, which allows for reducing considerably the duration of the measurement cycle;
- a lower sampling frequency of the second Hall sensor.

The elements of the claimed technical solution are functionally interrelated and their combined use results in the creation of a new unique technical solution. As shown above, all the units are functionally and structurally related.

All the units used in the device can be implemented using electronic components used to create digital integrated circuits, which is obvious for an expert in this art.

Thus, the implementation of all the used units is achieved by standard means that are based on classic principles of the implementation of the fundamentals of computing equipment.

As will be understood by an expert in this art, the aspects of this technical solution can be made in the form of a device the elements of which are connected by assembly operations. Correspondingly, various aspects of this technical solution can be implemented solely as hardware, as software (including application software and so on) or as a version of implementation combining software and hardware aspects which can generally be mentioned as a "module" or an "architecture." In addition, the aspects of this technical solution can take the form of a computer software product implemented on one or more machine-readable media that have a machine-readable program code on which it is implemented.

Any combination of one or more machine-readable media can be used. The program code embedded in a machine-readable medium can be transmitted using any medium, including, but not limited to, a wireless, wireline, optical fiber, infrared and any other appropriate network or a combination of those listed above.

A software program code for the implementation of this technical solution can be written in any programming language or a combination of programming languages, including an object-oriented programming language, for example Java, Smalltalk, C++ and so on, and usual procedural programming languages, for example the C programming language or similar programming languages. The program code can be executed on a device as well as in a hardware & software system in full, in part or as a separate software package, partially on a device, partially on an HSS server and partially on a remote computer, or fully on a remote computer. In the latter case, the remote computer can be connected with the meter through any type of network, including a local area network (LAN), a wide area network (WAN) or a connection with an external computer (for example, through the Internet using Internet service providers).

The aspects of this technical solution were described in detail with a reference to flowcharts, circuit diagrams and/or diagrams of methods, devices (systems) in accordance with the versions of implementation of this technical solution. It should be kept in mind that each block from the flowchart and/or diagrams as well as combinations of blocks from the flowchart and/or diagrams can be implemented by software program instructions. These software program instructions can be provided to the processor of a general-purpose computer, a special-purpose computer or another data processing device for creating a procedure so that instructions executed by the computer processor or another programmable data processing device create means for the implementation of the functions/actions specified in the block or blocks of a flowchart and/or diagram.

These software program instructions can also be stored on a machine-readable medium, that can manage a computer, other than a programmable data processing device or other than devices that function in a specific manner so that the instructions stored on the machine-readable medium create a device which includes instructions that perform the functions/actions specified in the block of the flowchart and/or diagram.

## Claims

1. An electronic tachometric meter for recording flow of fluid configured to transmit measurement results via a communication module, the electronic tachometric meter comprising a body with inlet and outlet pipes, the body comprising the following elements:
• a primary sensing element installed on an axis in the body cavity and made with a capability of rotation by the flow of flowing water;
• an electronic metering mechanism which is situated under the top cover and on the foundation, configured to measure the rotation of the primary sensing element in both directions using two Hall sensors;
• a liquid crystal indicator situated on the electronic metering mechanism and under the top cover, configured to display the measured value of the fluid volume determined by the electronic metering mechanism;
• a power supply unit situated on the electronic metering mechanism;
• two measuring magnetic field converters, the outputs of which are connected to two separate inputs of the analogue-to-digital converter of the electronic metering mechanism, configured to detect the rotation of the primary sensing element in two directions and situated on the lower part of the electronic metering mechanism;
• a communication module situated on the electronic metering mechanism and configured to transmit data on the fluid consumption to a receiving device.

2. The meter according to claim 1, which is **characterized in that** the power supply unit is a rechargeable battery that is built in the body.

3. The meter according to claim 1, which is **characterized in that** the primary sensing element is an impeller or a turbine.

4. The meter according to claim 1, **characterized in that** the metering magnetic field converter is a Hall sensor, or an induction coil, or a Wiegand sensor.

5. The meter according to claim 2, which is **characterized in that** the rechargeable battery is a cylindrical or tablet lithium thionyl chloride or lithium manganese battery.

6. The meter according to claim 1, **characterized in that** the communication module is built in the meter in the form of a radio module, additional electronic components and an antenna path track on a single printed circuit board of the device.

7. The meter according to claim 1, **characterized in that** the receiving device is a base station or a repeater device

8. The meter according to claim 1, **characterized in that** the electronic metering mechanism performs an independent calculation of the volume of the fluid which passed through the meter in the forward and/or backward direction.

9. The meter according to claim 6, which is **characterized in that** a sum or difference of the volume of the fluid in the forward and backward direction, or both volumes separately, are transmitted to the receiving device by means of the communication module.
